# EUROPEAN PATENT APPLICATION

(11) **EP 1 520 881 A1**
(43) Date of publication of application: **06.04.2005**
(21) Application number: 04255874.2
(22) Date of filing: 25.09.2004
(51) Int. Cl.: C09B 69/02, C09B 69/04, C09B 69/06, C09D 11/00, G03G 9/09

(54) **Black colorant compound and methods of making and using same**

(30) Priority: 30.09.2003 US 676323
(71) Applicant: Samsung Electronics Co., Ltd., Suwon-si, Gyeonggi-do 442-742 (KR)
(72) Inventor: Stulc, Leonard J., Shafer, Minnesota 55074 (US)
(74) Representative: Moy, David

(57) **Abstract**

The present invention provides black colorant compounds comprising a first ionic dye component having a known color characteristic that absorbs light in at least a portion of the visible light spectrum and a second ionic dye component having a known color characteristic that absorbs light in at least a portion of the visible light spectrum that is not absorbed by the first ionic dye component. The first ionic dye component and the second ionic dye component are complexed together to form an ionically complexed colorant compound that appears black in color. Alternatively, compositions comprise ionically complexed compounds containing a plurality of dye components, where the compounds together in a colorant composition appear black in color.

## Description

This invention relates to colorants. More specifically, the invention relates to black colorants comprising ionic dye components, and methods of making and using same.

Colorants have been used since the dawn of time by humankind as a way to express ideas and to modify and decorate the surrounding world. For example, colorant compositions were used to draw images on various surfaces, from cave walls to papyrus sheets to modem paper and canvas. Additionally, colorant compositions have been used to impart color to articles and surfaces, such articles as tools, toys, fabrics and plastic sheets, and on structural surfaces such as walls, floors and ceilings. To this end, colorants have been incorporated into ink and paint compositions, and in pre-concentrate compositions for incorporation into articles made from plastics and the like.

Various colorants have been developed over the years, and are generally characterized in the classes of dyes, pigments and lakes. A dye is defined in Webster's dictionary as "a usually soluble substance for staining or coloring e.g. fabrics or hair." Likewise, Webster's defines pigment as "dry coloring matter (especially an insoluble powder to be mixed with a liquid to produce paint etc)." A lake is defined as "A pigment formed by combining some coloring matter, usually by precipitation, with a metallic oxide or earth, esp. with aluminium hydrate; as, madder lake; Florentine lake; yellow lake, etc." Lake pigments are conventionally prepared by the precipitation of a soluble organic dye on to an insoluble, inorganic, adsorptive substrate. The pigment is formed by the chemical reaction that occurs when a suitable reagent, such as alum, is added to an aqueous solution containing the dyestuff and, usually, one or more other chemicals, such as sodium or potassium carbonate.

Permanent pigments are sought in the art to provide lasting color in various applications. For example, U.S. Patent No. 4,576,649 to Oliver, et. al. discloses preparation of permanent pigments from selected cationic dyes by precipitation from aqueous solution with complex heteropoly acids in the presence of selected amine color enhancing agents. These pigments are stated to be of interest in formulating high quality lithographic inks.

In a particular use, colorants are desired for incorporation into toners for electrostatographic printing and copying processes. For example, U.S. Patent No. 5,434,030 to Smith, et al. discloses a toner composition including a resin, a charge enhancing additive, an ion binding polymer, and at least one ionic dye complexed to the ion binding polymer. The ionic dye is a component that is different from the charge enhancing additive, and is stabilized and dispersed in the toner composition.

U.S. Patent No. 5,766,269 to Berenguer, et. al. describes cationic dyes comprising at least one quaternary ammonium group or protonated or protonizable tertiary amino group and at least one chromophoric radical, wherein the chromophoric radical is the radical of an optionally (pre)reduced sulphur dye, its precursor containing a cationic group which is a secondary amino group of basic character. These dyes are stated to be combinable with an anionic desolubilizer to form a water insoluble dye. Examples of desolubilizers include, among other examples, anionic dyes. See column 15, lines 37-50.

U.S. Patent No. 6,001,524 to Yoon discloses toner particles for color electrophotographic imaging applications. The particles are based on substantially amorphous polyesters that contain functionalities that are capable of being reacted with coloring reagents to form dyed polyester particles, which after further treatment are incorporated into toner compositions.

Nevertheless, there remains the need to provide colorant compounds, colorant compositions, methods of preparing colorant compounds and compositions, toner compositions, ink compositions, color pre-concentrate compositions, and methods of printing an image, featuring good and/or beneficial and/or useful properties, and/or preferably addressing at least one of the problems and concerns noted in the art.

An aim of the present invention is to provide colorant compounds, colorant compositions, methods of preparing colorant compounds and compositions, toner compositions, ink compositions, color pre-concentrate compositions, and methods of printing an image generally featuring beneficial and/or good and/or useful properties and preferably addressing at least one or some of the problems and concerns noted in the art.

A further aim of the present invention is to provide alternative colorant compounds and compositions to those already known.

A further and preferred aim of embodiments of the invention is to provide alternative and preferably improved colorant compounds and compositions, preferably with certain advantageous properties.

Other aims and/or advantages of the invention will be set forth in part in the description which follows and, in part, will be apparent or obvious from the description, or may be apparent from, or learned by, practice of the invention.

According to the present invention there is provided an ionically complexed black colorant compound, an ionically complexed black colorant composition, a method of preparing an ionically complexed black colorant composition, a coatable colorant composition, a toner composition, an ink composition, a color pre-concentrate composition, and a method of printing an image, as set forth in the appended claims. Preferred features of the invention will be apparent from the dependent claims, and the description which follows.

It has been found that ionically complexed black colorant compounds may be provided comprising a first ionic dye component having a known color characteristic that absorbs light in at least a portion of the visible light spectrum and a second ionic dye component having a known color characteristic that absorbs light in at least a portion of the visible light spectrum that is not absorbed by the first ionic dye component. The first ionic dye component and the second ionic dye component are complexed together to form an ionically complexed colorant compound that appears black in color.

Thus, in one aspect of the present invention there is provided an ionically complexed black colorant compound, comprising
a) a first ionic dye component having a known color characteristic that absorbs light in at least a portion of the visible light spectrum; and
b) a second ionic dye component having a known color characteristic that absorbs light in at least a portion of the visible light spectrum that is not absorbed by the first ionic dye component;
wherein the first ionic dye component and the second ionic dye component are complexed together to form an ionically complexed colorant compound that appears black in color.

Moreover, in a second aspect of the present invention there is provided an ionically complexed black colorant compound, comprising
a) a first ionic dye component having a known color characteristic that absorbs light in at least a portion of the visible light spectrum; and
b) a plurality of additional ionic dye components having known color characteristics that in combination absorb light in at least a portion of the visible light spectrum that is not absorbed by the first ionic dye component, wherein the first ionic dye component and the additional ionic dye components are complexed together to form an ionically complexed colorant compound that appears black in color.

For purposes of the present invention, a composition is stated to have an apparent color when evaluated in a manner to indicate the color that an observer under ordinary viewing conditions for the composition would ascribe to that composition, notwithstanding individual color inhomogeneities that might otherwise be observed when examining at higher magnifications. A dye component is an ion (or counterion) that exhibits an apparent color in the visible light range to the ordinary observer.

Compositions comprising these compounds are also provided. Methods of preparing these compositions, and methods of use of these compositions are also provided. Additionally, compositions are provided comprising ionically complexed compounds containing a plurality of dye components, where the compounds together in a colorant composition appear black in color.

Thus, in a third aspect of the present invention there is provided an ionically complexed black colorant composition comprising
a) a first ionic dye component having a known color characteristic that absorbs light in at least a portion of the visible light spectrum; and
b) a second ionic dye component having a known color characteristic that absorbs light in at least a portion of the visible light spectrum that is not absorbed by the first ionic dye component;
wherein the first ionic dye component and the second ionic dye component are complexed to form ionically complexed compounds that together in a colorant composition appear black in color.

In a fourth aspect of the present invention there is provided an ionically complexed black colorant composition, comprising
a) a first ionic dye component having a known color characteristic that absorbs light in at least a portion of the visible light spectrum; and
b) a plurality of additional ionic dye components having known color characteristics that in combination absorb light in at least a portion of the visible light spectrum that is not absorbed by the first ionic dye component;
wherein the first ionic dye component and the additional ionic dye components are complexed to form ionically complexed compounds that together in a colorant composition appear black in color.

In a fifth aspect of the present invention there is provided a method of preparing an ionically complexed black colorant compound, comprising
a) identifying a first ionic dye component having an apparent color characteristic that absorbs light in at least a portion of the visible light spectrum;
b) determining the components of the visible light spectrum that are not absorbed by the first ionic dye component;
c) based on the information determined in step b), identifying a second ionic dye component having a known color characteristic that absorbs light in at least a portion of the visible light spectrum that is not absorbed by the first ionic dye component, such that the combination of the first ionic dye component and the second ionic dye component absorbs sufficient amounts of the light wavelength spectrum to appear black in color; and
d) complexing the first ionic dye component with the second ionic dye component to form an ionically complexed colorant compound composition that appears black in color.

In a sixth aspect of the present invention there is provided a method of preparing an ionically complexed black colorant compound, comprising
a) identifying a first ionic dye component having an apparent color characteristic that absorbs light in at least a portion of the visible light spectrum;
b) determining the components of the visible light spectrum that are not absorbed by the first ionic dye component;
c) based on the information determined in step b), identifying a plurality of additional ionic dye components having known color characteristics that in combination absorb light in at least a portion of the visible light spectrum that is not absorbed by the first ionic dye component, such that the combination of the first ionic dye component and the additional ionic dye components absorbs sufficient amounts of the light wavelength spectrum to appear black in color; and
d) complexing the first ionic dye component with the additional ionic dye components to form an ionically complexed colorant compound composition that appears black in color.

In a seventh aspect of the present invention there is provided a method of preparing an ionically complexed black colorant composition, comprising
a) identifying a first ionic dye component having an apparent color characteristic that absorbs light in at least a portion of the visible light spectrum;
b) determining the components of the visible light spectrum that are not absorbed by the first ionic dye component;
c) based on the information determined in step b), identifying a second ionic dye component having a known color characteristic that absorbs light in at least a portion of the visible light spectrum that is not absorbed by the first ionic dye component, such that the combination of the first ionic dye component and the second ionic dye component absorbs sufficient amounts of the light wavelength spectrum to appear black in color; and
d) complexing the first ionic dye component and the second ionic dye component to form ionically complexed compounds that together in a colorant composition appear black in color.

In an eighth aspect of the present invention there is provided a coatable colorant composition comprising the black colorant described herein.

In a ninth aspect of the present invention there is provided a toner composition comprising the black colorant described herein.

In a tenth aspect of the present invention there is provided an ink composition comprising the black colorant described herein.

In an eleventh aspect of the present invention there is provided a color pre-concentrate composition comprising the black colorant as described herein.

In a twelfth aspect of the present invention there is provided a method of printing an image, comprising electrographically printing a toner composition as defined herein.

Where applicable, features described herein of the first, second, third, fourth, fifth, sixth, seventh, eighth, ninth, tenth, eleventh and twelfth aspects of the present invention, respectively, may be regarded as preferred features of the other aspects of the present invention.

The compounds and compositions of the present invention typically provide unique black colorant chemistries not previously known. These chemistries present advantages in formulation opportunities through the ability to use materials having unique solubility properties both prior to and after complexation. The resulting black colorant preferably exhibits less migration from the composition to undesired environments, such as staining various surfaces in which the composition may come in contact. Additionally, the black colorants of the present invention surprisingly can be formulated to have low solubility or be substantially insoluble in water or other selected colorant carrier solvent. In one aspect, compounds of the present invention optionally may additionally be complexed with a metal ion. However, in a more preferred aspect of the present invention, low solubility in the colorant carrier solvent may optionally be achieved by compounds that do not contain heavy metals. Thus, the present invention in a preferred aspect provides an "organic lake," meaning that the colorant compound is substantially free of inorganic metal counterions.

The present invention typically additionally provides substantial benefit in easily expanding the choice of black colorant materials for use in various applications. Colorants are always subject to testing to determine the effect of the chemistries employed on our environment, and also specifically on human health through direct contact or ingestion of the colorant. The identification and approval of new black colorant materials may be an expensive and drawn out clearing process due to the above concerns. The present invention allows the preparation of new black colorants without the need to create totally new molecules that require a full *de novo* clearance process. Instead, new black colorants may now be formed by complexing previously known (and preferably already cleared) dye molecules to form an apparently new color that incorporates partially old chemistry. Because the dye components are complexed to each other, the resulting color is stable in most environmental conditions without concern of differential chemical properties leading to a change in ratio of the different dyes as may occur in dye blends that are merely physically blended.

Additionally, because a great portion of the colorant compound comprises material that contributes to the apparent color, colorants of the present invention may exhibit surprisingly good black color rendition as compared to conventional lakes or other colorants.

The color black is observed when most or all of the visible light incident to the colored surface is absorbed. Black colorants of the present invention comprise a combination of dyes that each exhibit a color that is visible and apparent to the human eye, and which in combination absorb enough light that the color appears to be black. In many circumstances, a colorant that is advertised as being black in fact fails to absorb light in certain portions of the visible light spectrum. Thus, many printing inks and the like may have a tint or hue associated with the color, so that the color is perceptibly blue, brown or the like. In the present invention, a more true black may be obtained by providing additional dye components to absorb key regions of visible light, so that additional hues are less apparent or not apparent to the visual observer.

The color of light that is reflected from each individual dye of the colorant of the present invention would be quite apparent to visible perception. However, due to the close proximity of the dye components to each other, the apparent resulting color of the colorant is black, rather than a mixture of two or more distinguishable colors. This embodiment of the present invention provides a high degree of stability, with little or no issues of color separation that might be observed by merely blending two or more individual colorants that may have different solubility or dispersibility characteristics from each other.

A preferred embodiment is provided wherein the dye components have the same charge, i.e. are both anionic dye components or are both cationic dye components that are ionically complexed with a colorless counterion component. For purposes of the present invention, a colorless counterion is a component that in use does not exhibit a visibly apparent color. Alternatively, a preferred embodiment is provided wherein one of these dye components is an anionic dye and the other dye component is a cationic dye.

In another preferred embodiment of the present invention, the colorant comprises a combination of three or more dyes. These colorants may comprise dyes of opposite charges or may all have the same charge. For example, the colorant may comprise one anionic dye that is ionically complexed with two cationic dyes. Alternatively, for example, the colorant may comprise three or more anionic dyes that are ionically complexed with a cationic colorless counterion. The use of a plurality of dye counterions in particular provides effective absorption of more wavelengths of light with little or no issues of color separation that might be observed by merely blending two or more individual colorants that may have solubility or dispersibility characteristics that are different from each other.

In a preferred embodiment of the present invention, the colorless counterion component of the ionically complexed black colorant compound is a relatively small portion of the overall colorant. This embodiment is of benefit, because a larger portion of the colorant actually contributes to the color that is observed, providing a more effective black colorant that can be present as a smaller amount in the overall ultimate composition, while still having the desired colorant effect. In one preferred embodiment, the colorless counterion component comprises less than about 40% of the total colorant compound by weight. In another preferred embodiment, the colorless counterion component comprises less than about 20% of the total colorant compound by weight. In another preferred embodiment, the colorless counterion component comprises less than about 10% of the total colorant compound by weight.

In a preferred embodiment of the present invention, the ionically complexed colorant compound is substantially free of metal that is not covalently bound to the colorant compound. This is of particular benefit because such colorant compositions avoid the use of metals, and particularly heavy metals that may dissociate from the colorant compound and cause compositional disturbances or instability, such as charge imbalances, or raise health concerns.

Preferably, the ionically complexed colorant compound or composition has a water solubility of less than 100 parts per million. In addition, preferably the ionically complexed colorant compound or composition has a solubility in various carrier solvents such as ketones, alcohols, esters, glycol ethers and esters, aliphatic and aromatic hydrocarbons and the like of less than 100 parts per million.

In a particularly preferred embodiment, the ionically complexed black colorant compound contains no polymeric components. Such a compound is of particular benefit because it is easier to assure full coordination of all ionic sites when reacting only monomeric materials. Thus, larger compounds may have a tendency to prematurely insolubilize during the dye binding process prior to coordination of all ionic sites. Ionomers in particular may prematurely agglomerate before the desired colorant compound is formed. The presence of uncomplexed sites on a polymeric component may additionally provide regions of instability with respect to moisture, which may be problematic particularly if the final application of the colorant is in an environment where the colorant is exposed to moisture through, for example, skin contact or ambient humidity. The resulting image may be tacky or sensitive to water. Additionally, non-polymeric colorant compounds may be easier to process, handle, mill to the desired size and consistency and disperse into various resins or compositions. Further, colorant compositions that do not contain polymeric components do not provide an additive Tg that may adversely affect the predetermined balance of the binder. In a preferred embodiment, the colorant compound has a molecular weight of less than about 5000 Daltons, preferably less than 5000 Daltons. In another preferred embodiment, the colorant compound has a molecular weight of less than about 3000 Daltons, preferably less than 3000 Daltons.

Preferably, the black colorant is a single compound having the ionic dye components complexed, so that each compound *per se* will have the desired ratio of components to achieve the desired black apparent color. It will be understood that some ion exchange may occur in situ, or that in some preparation processes some compound pairs or groups may be formed, so that one compound of the pair will comprise a combination of ions, so that the pair of compounds taken together exhibits the desired apparent color. Likewise, a grouping of three or more compounds may be formed in a like manner, so that the group taken together exhibits the desired apparent black color. For purposes of the present invention, a certain amount of this pairing or grouping is contemplated on a molecular level, and the pair or group is considered to be within the scope of a black colorant compound as described herein.

In another embodiment of the present invention, predetermined combinations of ionic dyes may be prepared to ionically coordinate all components in the desired ratio in a single composition, without regard to whether these components are complexed with each other in a single compound. In this embodiment, preferably all ionic components are ionically complexed so that each compound in the composition is insoluble in water and in the carrier liquid of the ultimate coloring composition, so that no separation of the compounds from each other occurs under manufacture or use conditions. These colorant compositions may be formulated with additional ingredients and used in the manner of the compounds as described herein.

The anionic dyes to be used in the present invention may be any dye having a negative charge that is capable of complexing with a cationic counterion as taught herein. In one aspect of the present invention, the anionic dye comprises a plurality of negatively charged functionalities, sterically located so that the anionic dye is capable of complexing with a plurality of cationic counterions. Preferred anionic dyes are those that contain one or more sulfonate groups, carboxyl groups and/or hydroxyl salt groups. Examples of such anionic dyes include, but are not limited to, sulfonate salts of phthalocyanine, azo-pyrazoline and anthraquinone dyes, and mixtures thereof. Additional examples of such anionic dyes include Acid Alizarin Violet, Acid Yellow 40, Acid Red 4, Acid Blue 25, Acid Violet 7, Phloxine B, copper phthalocyaninetetrasulfonic acid tetrasodium salt, Quinoline yellow, Acid yellow 17, Tartrazine, Alizarin Yellow GG, Reactive Black 5, Eosin Y, Erioglaucine, Acid Red 91, Acid Red 51, and Food Black 1.

The cationic dyes to be used in the present invention may be any dye having a positive charge that is capable of complexing with an anionic counterion as taught herein. In one aspect of the present invention, the cationic dye comprises a plurality of positively charged functionalities, sterically located so that the cationic dye is capable of complexing with a plurality of anionic counterions. Preferred cationic dyes to be used in the present invention contain one or more quaternary ammonium, sulfonium, phosphonium and oxonium groups. Examples of such cationic dyes include, but are not limited to, Tetrazolium Violet, Rhodamine B, Indoine Blue, Auramine 0, mixtures thereof and the like. Additional examples of such cationic dyes are selected from the group consisting of Color Index Basic Red 12, Color Index Basic Red 14, Color Index Basic Red 28 and Color Index Basic Violet 10, Basic Yellow 1, Alcian Blue-tetrakis(methylpyridium) chloride, Basic Blue 41, Basic Red 1 and Basic Black 1.

The colorless counterion component may be any colorless counterion that is capable of complexing with the dye ion as taught therein. Preferably, the colorless counterion is an organic counterion. In a preferred embodiment, the colorless counterion comprises a plurality of functionalities available for coordination with the dye, so that a plurality of dye ions may be complexed with a single colorless counterion. The colorless counterion, when the dye to be complexed with is an anion, preferably is a cationic compound selected from quaternary ammonium salts, sulfonium salts, phosphonium salts, oxonium salts, and any combination thereof of alkyl, aryl and alkyl/aryl compounds. The colorless counterion, when the dye to be complexed with is a cation, preferably is an anionic compound selected from sulfonates, carboxylates, hydroxyl salts and any combination thereof of alkyl, aryl and alkyl/aryl compounds.

In a preferred embodiment of the present invention, the anionic dyes and the cationic dyes are water soluble prior to being complexed with each other. When solutions of each are combined, a water insoluble precipitate is formed. Optionally, a water miscible solvent may be added to increase solubility of either the cationic components, the anionic components, or both; particularly where the concentration of reactants in the reaction composition is high in order to reduce the volume of the reactant solution to a manageable level. After precipitation, the counter ions that were associated with the anionic and cationic reactants remain in solution. The precipitate is isolated by filtration and preferably washed with more water to remove any remaining soluble counter ions. This washing process optionally may be repeated several times. The precipitate is then dried and can then be used as a colorant. Preferably, the colorants of the present invention are not soluble in water. Water insolubility both eases handling of the colorant, and also provides a benefit in reducing the amount of staining of various surfaces during subsequent application or use of the colorant.

Colorants of the present invention may be used in any application where imparting a color is desired. Examples of such uses include as part of a material to transfer images and messages to various surfaces, and as a colorant to impart color to articles and surfaces, including articles such as tools, toys, fabrics and plastic sheets, and on structural surfaces such as walls, floors and ceilings.

In a preferred application, the colorant is provided in a vehicle in liquid or paste form as a coatable colorant composition for application to a surface to impart a color, for example as a coating, ink, toner composition or paint composition. Such a colorant composition may be applied to any suitable surface, such as leather, fabric, paper, polymeric surface, metal surface and the like, as will be apparent to the artisan. The colorant preferably is provided together with a binder in a homogeneous composition or as a suspension. In a particularly preferred embodiment, the colorant of the present invention is provided in a latex paint composition. Latex paint conventionally comprises pigments, binders, liquid carriers including water, and additives (such as surfactants). Paint compositions in general are known in the art, and may be readily formulated by the routineer to incorporate colorants of the present invention by reference to the present disclosure. Preferably, the binder of the latex paint composition comprises styrene-butadiene polymers, vinyl acrylic polymers or acrylic polymers, or combinations thereof as are known in the art.

Colorants of the present invention are particularly suited for use in toners used in the copying and printing industry. Most particularly, the present colorants are useful for incorporation in either liquid or dry toners for electrophotography. The colorants are readily compatible with desired toner chemistries, and further may result in toners that exhibit superior charge transfer characteristics.

Electrographic printing processes (including electrophotographic and electrostatic processes) use electrostatic transfer to move images made of discrete toner particles from one surface to the next. The charging of these toner particles is very important in this transfer process. Ionic dyes that are complexed with another ionic dye, rather than a heavy metal ion, exhibit different charge and transfer properties, thereby providing opportunity for improvement in toner transfer. The traditional and most commonly used black colorant compound is carbon black. Carbon black may be problematical for use in electrographic printing processes, because carbon black is conductive. Thus, during charging of the toner particle containing carbon black, the charge to be associated with the toner particle tends to at least partially dissipate, resulting in poor toner transfer.

When used as part of a toner composition, various suitable toner resins may be selected for incorporation with the colorant of the present invention. Illustrative examples of typical resins include polyamides, epoxies, polyurethanes, vinyl resins, polycarbonates, polyesters, and the like and mixtures thereof. Any suitable vinyl resin may be selected including homopolymers or copolymers of two or more vinyl monomers. Typical examples of such vinyl monomeric units include: styrene; vinyl naphthalene; ethylenically unsaturated mono-olefins such as ethylene, propylene, butylene, isobutylene and the like; vinyl esters such as vinyl acetate, vinyl propionate, vinyl benzoate, vinyl butyrate and the like; ethylenically unsaturated diolefins, such as butadiene, isoprene and the like; esters of unsaturated monocarboxylic acids such as methyl acrylate, ethyl acrylate, n-butyl acrylate, isobutyl acrylate, dodecyl acrylate, n-octyl acrylate, phenyl acrylate, methyl methacrylate, ethyl methacrylate, butyl methacrylate and the like; acrylonitrile; methacrylonitrile; vinyl ethers such as vinyl methyl ether, vinyl isobutyl ether, vinyl ethyl ether and the like; vinyl ketones such as vinyl methyl ketone, vinyl hexyl ketone, methyl isopropenyl ketone and the like; and mixtures thereof. Also, there may be selected as toner resins various vinyl resins blended with one or more other resins, preferably other vinyl resins, which insure good triboelectric properties and uniform resistance against physical degradation. Furthermore, nonvinyl type thermoplastic resins may also be employed including resin modified phenolformaldehyde resins, oil modified epoxy resins, polyurethane resins, cellulosic resins, polyether resins, polyester resins, and mixtures thereof.

Preferably, the toner composition is a liquid toner.

Preferably, the toner comprises an amphipathic graft copolymer that has been dispersed in a liquid carrier to form an organosol, then mixed with other ingredients to form a liquid toner composition. Typically, organosols are synthesized by nonaqueous dispersion polymerization of polymerizable compounds (e.g. monomers) to form copolymeric binder particles that are dispersed in a low dielectric hydrocarbon solvent (carrier liquid). These dispersed copolymer particles are sterically-stabilized with respect to aggregation by chemical bonding of a steric stabilizer (e.g. graft stabilizer), solvated by the carrier liquid, to the dispersed core particles as they are formed in the polymerization. Details of the mechanism of such steric stabilization are described in Napper, D.H., "Polymeric Stabilization of Colloidal Dispersions," Academic Press, New York, N.Y., 1983. Procedures for synthesizing self-stable organosols are described in "Dispersion Polymerization in Organic Media," K.E.J. Barrett, ed., John Wiley: New York, N.Y., 1975.

Liquid toner compositions have been manufactured using dispersion polymerization in low polarity, low dielectric constant carrier solvents for use in making relatively low glass transition temperature (Tg < 30°C) film-forming liquid toners that undergo rapid self-fixing in the electrophotographic imaging process. See, e.g., U.S. Pat. No. 5,886,067 and 6,103,781. Organosols have also been prepared for use in making intermediate glass transition temperature (Tg between 30-55°C) liquid electrostatic toners for use in electrostatic stylus printers. See, e.g., U.S. Pat. No. 6,255,363 B1. A representative non-aqueous dispersion polymerization method for forming an organosol is a free radical polymerization carried out when one or more ethylenically-unsaturated monomers, soluble in a hydrocarbon medium, are polymerized in the presence of a preformed, polymerizable solution polymer (e.g. a graft stabilizer or "living" polymer). See U.S. Pat. No. 6,255,363.

Once the organosol has been formed, one or more additives can be incorporated, as desired. For example, one or more visual enhancement additives and/or charge control agents can be incorporated. The composition can then subjected to one or more mixing processes, such as homogenization, microfluidization, ball-milling, attritor milling, high energy bead (sand) milling, basket milling or other techniques known in the art to reduce particle size in a dispersion. The mixing process acts to break down aggregated visual enhancement additive particles, when present, into primary particles (having a diameter in the range of 0.05 to 5 microns) and may also partially shred the dispersed copolymeric binder into fragments that can associate with the surface of the visual enhancement additive.

According to this embodiment, the dispersed copolymer or fragments derived from the copolymer then associate with the visual enhancement additive, for example, by adsorbing to or adhering to the surface of the visual enhancement additive, thereby forming toner particles. The result is a sterically-stabilized, nonaqueous dispersion of toner particles having a volume mean particle diameter (determined with laser diffraction) in the range of about 0.05 to about 50.0 microns, more preferably in the range of about 3 to about 10 microns, most preferably in the range of about 1.5 to about 5 microns. In some embodiments, one or more charge control agents can be added before or after mixing, if desired.

Several characteristics of liquid toner compositions are important to provide high quality images. Toner particle size and charge characteristics are especially important to form high quality images with good resolution. Further, rapid self-fixing of the toner particles is an important requirement for some liquid electrophotographic printing applications, e.g. to avoid printing defects (such as smearing or trailing-edge tailing) and incomplete transfer in high-speed printing. For example, in organosol toner compositions that exhibit low Tgs, the resulting film that is formed during the imaging process may be sticky and cohesively weak under transfer conditions. This may result in image splitting or undesired residue left on the photoreceptor or intermediate image receptor surfaces. Another important consideration in formulating a liquid toner composition relates to the durability and archivability of the image on the final receptor. Erasure resistance, e.g. resistance to removal or damage of the toned image by abrasion, particularly by abrasion from natural or synthetic rubber erasers commonly used to remove extraneous pencil or pen markings, is a desirable characteristic of liquid toner particles.

The colorant of the present invention may alternatively be dispersed within a matrix to provide color to an article formed from the matrix. For example, colorants may be incorporated in polymeric resin compositions, which are then processed to form fibers, sheet materials, or solid forms by processing techniques known in the art. For example, fibers may be made by gel-spinning, electrospinning, and melt spinning techniques. Sheet materials may be formed by extrusion and/or calendaring processes and the like, and solid forms may be formed by injection molding, rotational molding, and the like. The resulting article thereby exhibits an apparent color due to the presence of the colorant of the present invention. Likewise, color may be provided to articles made by alternative matrix materials, such as wax for forming wax candles, and the like.

In order to facilitate mixing into a final matrix composition, preferably colorants of the present invention are provided as a color pre-concentrate composition comprising the colorant in a small amount of material that is compatible with the matrix material that is ultimately to comprise the colorant. This color pre-concentrate composition preferably is provided in the form of a dry powder, a liquid, a pelletized concentrate or as mini-beads. For example, if the ultimate matrix is to be formed of a polyester, the pre-concentrate preferably comprises polyester material. Likewise, if the matrix is to be formed from wax, the pre-concentrate preferably comprises a wax material. Preferably, the colorant is provided in a concentration of about 20% to about 60% by weight, when provided as a pre-concentrate, for example preferably provided in a concentration of 20% to 60% by weight.

Alternatively, the colorant may be dispersed within a combination matrix, such as fibers and the like, in order to provide colored materials. An example of such a matrix is paper, which comprises cellulosics fibers and a binder system to hold the fibers together. Colorant of the present invention may optionally be dispersed in the matrix, thereby providing the article with an apparent color.

All patents, patent documents, and publications cited herein are incorporated by reference as if individually incorporated. Unless otherwise indicated, all parts and percentages are by weight and all molecular weights are weight average molecular weights. The foregoing detailed description has been given for clarity of understanding only. No unnecessary limitations are to be understood therefrom. The invention is not limited to the exact details shown and described, for variations obvious to one skilled in the art will be included within the invention defined by the claims.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An ionically complexed black colorant compound, comprising
a) a first ionic dye component having a known color characteristic that absorbs light in at least a portion of the visible light spectrum; and
b) a second ionic dye component having a known color characteristic that absorbs light in at least a portion of the visible light spectrum that is not absorbed by the first ionic dye component;
wherein the first ionic dye component and the second ionic dye component are complexed together to form an ionically complexed colorant compound that appears black in color.

2. The ionically complexed colorant compound of claim 1, wherein the first ionic dye component and the second ionic dye component are oppositely charged ions.

3. The ionically complexed colorant compound of claim 1, wherein the first ionic dye component and the second ionic dye component have the same charge, and are ionically complexed with a colorless counterion component.

4. The ionically complexed colorant compound of claim 3, wherein the first ionic dye component and the second ionic dye component are anionic dye components.

5. The ionically complexed colorant compound of claim 3, wherein the first ionic dye component and the second ionic dye component are cationic dye components.

6. The ionically complexed colorant compound of any preceding claim, wherein at least one of the dye components comprises a plurality of ionic functionalities.

7. An ionically complexed black colorant compound, comprising
a) a first ionic dye component having a known color characteristic that absorbs light in at least a portion of the visible light spectrum; and
b) a plurality of additional ionic dye components having known color characteristics that in combination absorb light in at least a portion of the visible light spectrum that is not absorbed by the first ionic dye component, wherein the first ionic dye component and the additional ionic dye components are complexed together to form an ionically complexed colorant compound that appears black in color.

8. The ionically complexed colorant compound of claim 7, wherein the first ionic dye component comprises a plurality of ionic functionalities, and the additional ionic dye components are of opposite charge of the ionic functionalities of the first ionic dye component, and the additional ionic dye components are ionically complexed with the ionic functionalities of the first ionic dye component.

9. The ionically complexed colorant compound of any preceding claim, wherein the compound has a water solubility of less than 100 parts per million.

10. The ionically complexed colorant compound of any preceding claim, wherein the compound is substantially free of metal that is not covalently bound to the colorant compound.

11. The ionically complexed colorant compound of any preceding claim, wherein the compound has a molecular weight of less than about 5000 Daltons.

12. The ionically complexed colorant compound of any preceding claim, wherein the compound has a molecular weight of less than about 3000 Daltons.

13. An ionically complexed black colorant composition comprising
a) a first ionic dye component having a known color characteristic that absorbs light in at least a portion of the visible light spectrum; and
b) a second ionic dye component having a known color characteristic that absorbs light in at least a portion of the visible light spectrum that is not absorbed by the first ionic dye component;
wherein the first ionic dye component and the second ionic dye component are complexed to form ionically complexed compounds that together in a colorant composition appear black in color.

14. The ionically complexed colorant composition of claim 13, wherein the composition further comprises a colorless ionic component that is capable of coordinating with either the first ionic dye component and/or the second ionic dye component.

15. An ionically complexed black colorant composition, comprising
a) a first ionic dye component having a known color characteristic that absorbs light in at least a portion of the visible light spectrum; and
b) a plurality of additional ionic dye components having known color characteristics that in combination absorb light in at least a portion of the visible light spectrum that is not absorbed by the first ionic dye component;
wherein the first ionic dye component and the additional ionic dye components are complexed to form ionically complexed compounds that together in a colorant composition appear black in color.

16. A method of preparing an ionically complexed black colorant compound, comprising
a) identifying a first ionic dye component having an apparent color characteristic that absorbs light in at least a portion of the visible light spectrum;
b) determining the components of the visible light spectrum that are not absorbed by the first ionic dye component;
c) based on the information determined in step b), identifying a second ionic dye component having a known color characteristic that absorbs light in at least a portion of the visible light spectrum that is not absorbed by the first ionic dye component, such that the combination of the first ionic dye component and the second ionic dye component absorbs sufficient amounts of the light wavelength spectrum to appear black in color; and
d) complexing the first ionic dye component with the second ionic dye component to form an ionically complexed colorant compound composition that appears black in color.

17. A method of preparing an ionically complexed black colorant compound, comprising
a) identifying a first ionic dye component having an apparent color characteristic that absorbs light in at least a portion of the visible light spectrum;
b) determining the components of the visible light spectrum that are not absorbed by the first ionic dye component;
c) based on the information determined in step b), identifying a plurality of additional ionic dye components having known color characteristics that in combination absorb light in at least a portion of the visible light spectrum that is not absorbed by the first ionic dye component, such that the combination of the first ionic dye component and the additional ionic dye components absorbs sufficient amounts of the light wavelength spectrum to appear black in color; and
d) complexing the first ionic dye component with the additional ionic dye components to form an ionically complexed colorant compound composition that appears black in color.

18. A method of preparing an ionically complexed black colorant composition, comprising
a) identifying a first ionic dye component having an apparent color characteristic that absorbs light in at least a portion of the visible light spectrum;
b) determining the components of the visible light spectrum that are not absorbed by the first ionic dye component;
c) based on the information determined in step b), identifying a second ionic dye component having a known color characteristic that absorbs light in at least a portion of the visible light spectrum that is not absorbed by the first ionic dye component, such that the combination of the first ionic dye component and the second ionic dye component absorbs sufficient amounts of the light wavelength spectrum to appear black in color; and
d) complexing the first ionic dye component and the second ionic dye component to form ionically complexed compounds that together in a colorant composition appear black in color.

19. A coatable colorant composition comprising the black colorant of any of claims 1 to 12.

20. The coatable colorant composition of claim 19, wherein the composition is a latex paint.

21. A toner composition comprising the black colorant of any of claims 1 to 12.

22. The toner composition of claim 21, wherein the toner comprises an amphipathic polymer.

23. An ink composition comprising the black colorant of any of claims 1 to 12.

24. A color pre-concentrate composition comprising the black colorant of any of claims 1 to 12.

25. A method of printing an image, comprising electro graphically printing a toner of either of claims 21 and 22.
